# EUROPÄISCHE PATENTSCHRIFT

(11) **EP 0 891 007 B1**
(45) Veröffentlichungstag und Bekanntmachung des Hinweises auf die Patenterteilung: **11.10.2006**
(21) Anmeldenummer: 98106195.5
(22) Anmeldetag: 04.04.1998
(51) Int. Cl.: H01R 4/64

(54) **Vorrichtung zum Anschluss einer elektrischen Leitung an einem Eisenbahnschienensteg o. dgl.**
Apparatus for connecting an electric wire to a rail web
Procédé pour brancher un câble électrique à l' âme d'un rail de chemin de fer

(30) Priorität: 11.07.1997 DE 29712206 U
(43) Veröffentlichungstag der Anmeldung: 13.01.1999
(73) Patentinhaber: ERICO Products AG, 3280 Murten (CH)
(72) Erfinder: Gänslein, Hans-Günther, 96450 Coburg (DE)
(74) Vertreter: Brückner, Raimund

(56) Entgegenhaltungen:
- EP-A- 0 575 259
- DE-U- 8 901 317
- US-A- 5 018 920

## Beschreibung

Die Erfindung richtet sich auf eine Vorrichtung zum Anschluss einer elektrischen Leitung an einem Eisenbahnschienensteg o. dgl. umfassend wenigstens eine Buchse aus elektrisch leitendem Material mit einer durchgehenden Bohrung und mit einem Zylinderabschnitt, dessen Außendurchmesser etwa den Durchmesser einer Einsetzbohrung im Schienensteg entspricht, und mit einem den Zylinderabschnitt radial nach außen überragenden Anschlagkragen.

Eine derartige Vorrichtung ist aus dem deutschen Gebrauchsmuster 89 01 317 U1 bekannt. Bei dieser vorbekannten Vorrichtung ist eine einzige Buchse vorgesehen, welche durch einen Spreizdorn nach dem Einsetzen in die Bohrung der Schiene aufgespreizt wird, wobei Verdrängungsmaterial auf der dem Flansch der Buchse abgewandten Seite über den Bohrungsrand der Schiene hinaus radial verdrängt wird und dementsprechend für eine Festlegung der Buchse sorgt.

Hiervon ausgehend liegt der Erfindung die Aufgabe zugrunde, eine Vorrichtung der eingangs genannten Art so weiterzubilden, dass eine noch zuverlässigere Festlegung am Schienensteg bei noch weiter verbesserter Kontaktierung erreicht wird, und es darüber hinaus möglich ist, beidseitig Kabel festzulegen, wie dies bei vielen praktischen Anwendungsfällen häufig der Fall ist.

Diese Aufgabe wird erfindungsgemäß dadurch gelöst, dass eine weitere Buchse vorgesehen ist mit einem Zylinderabschnitt, dessen Außendurchmesser in etwa dem Innendurchmesser der ersten Buchse entspricht und mit einem Anschlagkragen, der sich radial von diesem Zylinderabschnitt nach außen derart weg erstreckt, dass die weitere Buchse von der anderen Seite des Schienensteges, von der die erste Buchse eingesetzt ist, in die erste Buchse einsetzbar und durch axiale und/oder radiale Deformation festlegbar ist.

In weiterer Ausgestaltung der Erfindung kann vorgesehen sein, dass die erste Buchse am flanschseitigen Ende der Durchgangsbohrung eine Ausdrehung aufweist. Hierdurch ist es möglich, dass beim Durchziehen des Spreizdornes verdrängtes Material aus dem Zylinderabschnitt der weiteren Buchse in diese Ausdrehung bzw. Hinterschneidung hinein gedrückt wird und auf diese Weise eine zuverlässige, definierte Festlegung ermöglicht.

Günstigerweise kann schließlich noch ein Gewindebolzen vorgesehen sein, der die beiden Buchsen gegeneinander verspannt und zur Festlegung von Kabelanschlußösen beiderseits des Schienensteges verwendbar ist.

Nachfolgend wird die Erfindung anhand eines bevorzugten Ausführungsbeispiels in Verbindung mit der Zeichnung näher erläutert. Dabei zeigen:

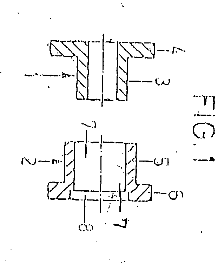

- Fig. 1: einen Schnitt der beiden Buchsen vor der Montage,
- Fig. 2: einen Schnitt durch einen Schienensteg bei eingesteckten Buchsen,
- Fig. 3: eine Fig. 2 entsprechende Darstellung zusammen mit dem Spreizdorn und
- Fig. 4: eine Fig. 2 entsprechende Darstellung mit eingesetztem Gewindebolzen und Kabelanschlußösen.

Eine erfindungsgemäße Vorrichtung umfaßt eine Buchse 1 und eine Buchse 2.

Die Buchse 1 weist einen Zylinderabschnitt 3 und einen sich radial nach außen von dem Zylinderabschnitt 3 weg erstreckenden Anschlagkragen 4 auf.

Die Buchse 2 weist ebenfalls einen Zylinderabschnitt 5 und einen sich radial nach außen erstreckenden Anschlagkragen 6 auf, der im Bereich der Verlängerung der Innenbohrung 7 des Zylinderabschnitts 5 eine Ausdrehung 8 aufweist.

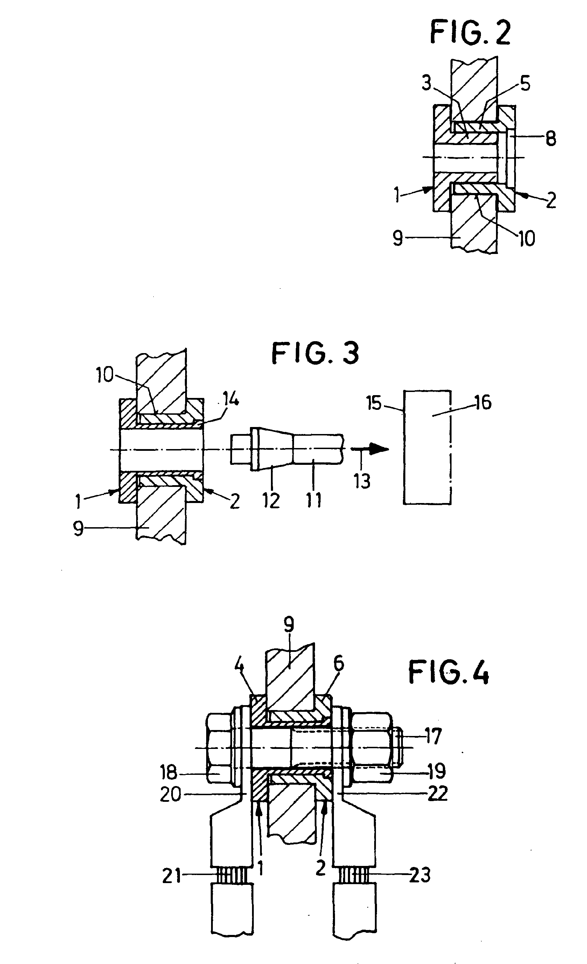

Der Innendurchmesser der Bohrung 7 des Zylinderabschnitts 5 der Buchse 2 entspricht dem Außendurchmesser des Zylinderabschnitts 3 der Buchse 1, so dass die Buchse 1, wie in Fig. 2 dargestellt, in die Buchse 2 einsetzbar ist.

In Fig. 2 ist ein Schnitt durch den Schienensteg 9 einer Eisenbahnschiene dargestellt, wobei die Schienen-Lauffläche oberhalb des Schienenstegs und der Befestigungs-Fußbereich unterhalb des Schienensteges abgeschnitten sind. Aus Fig. 2 ist erkennbar, dass der Schienensteg 9 eine Durchgangsbohrung 10 aufweist, deren Innendurchmesser dem Außendurchmesser des Zylinderabschnitts 5 der Buchse 2 entspricht, so dass die beiden Buchsen 1,2 von verschiedenen Seiten her in die Durchgangsbohrung 10 und ineinander gesteckt werden können.

Zur Festlegung wird, wie in Fig. 3 veranschaulicht, ein Spreizdorn 11 mit einem Konusabschnitt 12 in der Zeichnung ausgehend von der linken Seite durch das Innere des Zylinderabschnittes 3 in Richtung des Pfeils 13 gezogen, wodurch Material des Zylinderabschnittes 3 axial und radial verdrängt wird und als Füllmaterial 14 die Ausdrehung 8 hintergreift. Die Fläche 15 des Ziehwerkzeuges 16 für den Spreizdorn 11 stützt sich in Richtung entgegen dem Pfeil 13 ab und kann deshalb zur Glättung des ausgedrückten Materials herangezogen werden. Hierdurch sind die beiden Buchsen 1,2 dann in der Durchgangsbohrung 10 festgelegt.

In Fig. 4 ist dargestellt, dass durch die beiden Buchsen ein Gewindebolzen 17 gesteckt werden kann, der auf der einen Seite einen Kopf 18 aufweist, und auf den auf der anderen Seite eine Mutter 19 aufgeschraubt ist. Zwischen dem Kopf 18 und dem Anschlagkragen 4 ist eine erste Kabelöse 20 mit einem elektrischen Kabel 21 festgelegt und zwischen dem Kragen 6 der Buchse 2 und der Mutter 19 ist eine Kabelöse 22 eines zweiten Kabels 23 angeordnet. Gleichzeitig verspannt die Mutter 19 in Zusammenwirken mit dem Kopf 18 die beiden Buchsen 1,2 gegeneinander.

## Patentansprüche

1. Vorrichtung zum Anschluß einer elektrischen Leitung (21, 23) an einen Eisenbahnschienensteg (9) o. dgl. umfassend wenigstens eine Buchse (2) aus elektrisch leitendem Material mit einer durchgehenden Bohrung (7) und mit einem Zylinderabschnitt (5), dessen Außendurchmesser etwa dem Durchmesser einer Einsetzbohrung (10) im Schienensteg (9), entspricht, und mit einem den Zylinderabschnitt (5) radial nach außen überragenden Anschlagkragen (6), **dadurch gekennzeichnet, daß** eine weitere Buchse (1) vorgesehen ist, mit einem Zylinderabschnitt (3), dessen Außendurchmesser in etwa dem Innendurchmesser der Buchse (2) entspricht und mit einem Anschlagkragen (4), der sich radial von dem Zylinderabschnitt (3) nach außen derart weg erstreckt, daß die weitere Buchse (1) von der anderen Seite des Schienenstegs (9), von der die Buchse (2) eingesetzt ist, in die Buchse (2) einsetzbar und durch axiale und/oder radiale Deformation festlegbar ist.

2. Vorrichtung nach Anspruch 1, **dadurch gekennzeichnet, daß** die Buchse (2) am flanschseitigen Ende der Durchgangsbohrung (7) eine Ausdrehung (8) aufweist.

3. Vorrichtung nach Anspruch 1, **dadurch gekennzeichnet, daß** ein Gewindebolzen (17) vorgesehen ist, der die beiden Buchsen (1,2) gegeneinander verspannt und zur Festlegung von Kabelanschlußösen (20, 22) beiderseits des Schienensteges (9) verwendbar ist.

## Claims

1. Device for connecting an electrical line (21, 23) to a railway rail web (9) or the like, comprising at least one bush (2) made of electrically conducting material and having a through-bore (7) and a cylindrical section (5), the outside diameter of which corresponds approximately to the diameter of an insertion hole (10) in the rail web (9), and having a stop collar (6) projecting radially outwards beyond the cylindrical section (5), **characterized in that** a further bush (1) is provided which has a cylindrical section (3), the outside diameter of which corresponds approximately to the inside diameter of the bush (2), and a stop collar (4) which extends radially outwards away from the cylindrical section (3) in such a way that the further bush (1) can be inserted into the bush (2) from the other side of the rail web (9) from which the bush (2) is inserted and can be fixed by axial and/or radial deformation.

2. Device according to Claim 1, **characterized in that** the bush (2) has a turned recess (8) on the flange-side end of the through-bore (7).

3. Device according to Claim 1, **characterized in that** a threaded bolt (17) which restrains the two bushes (1, 2) against one another and can be used for fastening cable connection lugs (20, 22) on both sides of the rail web (9) is provided.

## Revendications

1. Dispositif pour brancher une ligne électrique (21, 23) à l'âme d'un rail de chemin de fer (9) ou similaire, comprenant au moins une douille (2) constituée de matériau électriquement conducteur avec un alésage traversant (7) et avec une portion cylindrique (5) dont le diamètre extérieure correspond approximativement au diamètre d'un alésage d'insertion (10) dans l'âme du rail (9), et comprenant un rebord de butée (6) dépassant radialement vers l'extérieur de la portion cylindrique (5), **caractérisé en ce que** l'on prévoit une douille supplémentaire (1) avec une portion cylindrique (3), dont le diamètre extérieur correspond approximativement au diamètre intérieur de la douille (2), et comprenant un rebord de butée (4) qui s'étend radialement vers l'extérieur depuis la portion cylindrique (3) de telle sorte que la douille supplémentaire (1) puisse être insérée dans la douille (2) depuis l'autre côté de l'âme du rail (9) de celui par lequel la douille (2) est insérée, et puisse être fixée par déformation axiale et/ou radiale.

2. Dispositif selon la revendication 1, **caractérisé en ce que** la douille (2) présente à l'extrémité de l'alésage traversant (7) du côté de la bride, un alésage au tour (8).

3. Dispositif selon la revendication 1, **caractérisé en ce que** l'on prévoit un boulon fileté (17) qui serre l'une contre l'autre les deux douilles (1, 2) et qui peut être utilisé pour fixer des oeillets de branchement de câbles (20, 22) des deux côtés de l'âme du rail (9).
